# EUROPÄISCHE PATENTANMELDUNG

(11) **EP 3 699 398 A1**
(43) Veröffentlichungstag der Anmeldung: **26.08.2020**
(21) Anmeldenummer: 20158371.3
(22) Anmeldetag: 20.02.2020
(51) Int. Cl.: F01D 5/20

(54) **DECKBANDLOSE SCHAUFEL FÜR EINE SCHNELLLAUFENDE TURBINENSTUFE**

(30) Priorität: 21.02.2019 DE 102019202388
(71) Anmelder: MTU Aero Engines AG, 80995 München (DE)
(72) Erfinder: Maar, Karl, 80995 München (DE); Frischbier, Jörg, 80995 München (DE); Klingels, Hermann, 80995 München (DE); Wittmer, Jens, 80995 München (DE); Pernleitner, Martin, 80995 München (DE)

(57) **Zusammenfassung**

Die vorliegende Erfindung ist auf eine Turbinenlaufschaufel für eine schnelllaufende Turbinenstufe (26) einer Fluggasturbine (10) gerichtet, die einen radial innen angeordneten Schaufelfuß (54) und ein Schaufelblatt (46) aufweist, das sich ausgehend von dem Schaufelfuß (54) nach radial außen erstreckt. Dabei ist vorgesehen, dass die Schaufel (42) deckbandlos ausgebildet ist und das Schaufelblatt (46) einen radial außen liegenden Endabschnitt (44) aufweist. Das Schaufelblatt (46) weist eine radial innere Sehnenlänge (Si) auft, die mindestens das 1,1-fache, vorzugsweise mindestens das 1,2-fache, insbesondere mindestens das 1,3-fache, einer radial äußeren Sehnenlänge (Sa) beträgt, wobei die innere Sehnenlänge (Si) unmittelbar oberhalb des Schaufelfußes (54) an dem Schaufelblatt (46) gemessen ist und die äußere Sehnenlänge (Sa) im Bereich oder unterhalb des Endabschnitts (44) an dem Schaufelblatt (46) gemessen ist.

## Beschreibung

Die vorliegende Erfindung betrifft eine Schaufel für eine schnelllaufende Turbinenstufe einer Fluggasturbine, insbesondere eines Flugzeugtriebwerks.

Bei einer schnelllaufenden Turbinenstufe, die insbesondere als Niederdruckturbine in einem Triebwerk mit Getriebfan, auch als GTF (geared Turbofan) bezeichnet, ergeben sich Werte für Umlaufgeschwindigkeit Utip an der Schaufelspitze von 300m/s und mehr. Im Vergleich dazu liegt die Umlaufgeschwiendigkeit Utip bei Turbinenstufen konventioneller Triebwerken bzw. bei nicht schnelllaufenden Turbinenstufen, die mit der Fan-Drehzahl laufen, bei maximal 250m/s.

"Schnelllaufend" bedeutet in diesem Zusammenhang, dass die betreffende Turbinenstufe mittels eines Getriebes mit dem Fan bzw. Triebwerkseintrittslaufradgekoppelt ist, so dass es sich im Betrieb der oder die betreffenden Laufschaufelkränze dieser Turbinenstufe schneller drehen als der Fan.

Richtungsangaben wie "Axial-" bzw. "axial", "Radial-" bzw. "radial" und "Umfangs-" sind grundsätzlich auf die Maschinenachse der Fluggasturbine bezogen zu verstehen, sofern sich aus dem Kontext nicht explizit oder implizit etwas anderes ergibt.

In schnelllaufenden Turbinenstufen ist die Belastung auf die Schaufeln bzw. deren Schaufelblätter sehr groß. Insbesondere sind die Schaufelblätter im Betrieb einer höheren Fremdpartieklenergie in Folge der höheren Umlaufgeschwindigkeiten ausgesetzt, sogenannten Einschlägen bzw. Impacts, die zu Primär- und Folgeschäden an den Schaufeln führen. Dabei sind die Primär- und Folgeschäden umso größer, je schneller sich die Turbinenstufe bzw. die Schaufeln im Heißgasstrom drehen. Ferner sind auch stärke Einflüsse der wirkenden Fliehkräfte auf die Schaufeln feststellbar. Dabei ist weiter zu berücksichtigen, dass für solche Schaufeln üblicherweise Nickel-Werkstoffe verwendet werden. Bei Verwendung von Schaufeln aus spröden Werkstoffen ist entsprechend stärkerer Verschleiß bzw. Schädigung festzustellen.

Die der Erfindung zu Grunde liegende Aufgabe wird darin gesehen, eine Schaufel für eine schnelllaufende Turbinenstufe bereitzustellen, die eine verbesserte Robustheit aufweist im Betrieb.

Dieser Aufgabe wird gelöst durch eine Schaufel mit den Merkmalen des Anspruchs 1, eine Turbinenstufe mit den Merkmalen des Anspruchs 7 und durch ein Flugzeugtriebwerk mit den Merkmalen des Anspruchs 9. Vorteilhafte Ausgestaltungen mit zweckmäßigen Weiterbildungen sind in den abhängigen Patentansprüchen angegeben.

Vorgeschlagen wird also eine Schaufel für eine schnelllaufende Turbinenstufe einer Fluggasturbine, insbesondere eines Flugzeugtriebwerks, mit einem radial innen angeordneten Schaufelfuß, und einem Schaufelblatt, das sich ausgehend von dem Schaufelfuß nach radial außen erstreckt. Dabei ist vorgesehen, dass die Schaufel deckbandlos ausgebildet ist und das Schaufelblatt einen radial außen liegenden Endabschnitt aufweist, der in einem eingebauten Zustand der Schaufel einer Einlauffläche gegenüber anordenbar ist, und dass das Schaufelblatt radial innen eine innere Sehnenlänge aufweist, die mindestens das 1,1-fache, vorzugsweise mindestens das 1,2-fache, insbesondere mindestens das 1,3-fache von einer radial äußeren Sehnenlänge beträgt, wobei die innere Sehnenlänge unmittelbar oberhalb des Schaufelfußes an dem Schaufelblatt gemessen ist und die äußere Sehnenlänge im Bereich oder unterhalb des Endabschnitts an dem Schaufelblatt gemessen ist.

"Schnelllaufend" kann insbesondere bedeuten, dass die Schaufel für ein An² ≥ 4000 m²/s², vorzugsweise ≥ 4500 m²/s², insbesondere ≥ 5000 m²/s² im ADP-Bereich der Fluggasturbine (10) ausgelegt ist und/oder für ein(e) entsprechend ausgelegte(s) Turbinenstufe/Fluggasturbine geeignet und/oder bestimmt sind. "An²" ist dabei die Ringraumfläche A am Austritt der Turbinenstufe multipliziert mit dem Quadrat der Drehzahl n. "ADP" steht für "Aerodynamic Design Point", d.h. den Betriebszustand auf Reiseflughöhe, der auch "cruise condition" genannt wird. Bei konventionellen, nicht schnelllaufenden Turbinenstufen beträgt An² im ADP-Bereich dagegen deutlich unter 2000 m²/s².

Durch die deckbandlose Ausgestaltung der Schaufel kann eine Reduzierung der Randlast der Schaufel erreicht werden. Durch die Einsparung von Masse an den radial äußersten Bereichen der Schaufel können die wirkenden Fliehkräfte maßgeblich reduziert werden. Somit können insbesondere in dem Schaufelblatt bzw. dem Schaufelprofil auftretende Spannungen reduziert werden. Durch die verringerten Spannungen kann die Robustheit gegenüber Schlagbeanspruchung, insbesondere bei hohen Drehzahlen und vergleichsweise wenig duktilen Werkstoffen, wie z.B. TiAl, weiter verbessert werden.

Die Sehnenlänge verändert sich somit über die radiale Erstreckung des Schaufelblatts im Vergleich zu einer konventionellen Turbinenschaufel, bei der die innere Sehnenlänge weniger als 10% länger als die äußeren Sehnenlänge ist, in besonders hohem Maße. Dies kann aus aerodynamischen Gesichtspunkten zwar zunächst nachteilig sein, gestattet dafür aber eine besonders vorteilhafte Verteilung der Mittelspannung und des Widerstandsmoments über die Schaufelhöhe. Auch hierdurch kann die Robustheit gegenüber Schlagbeanspruchung, insbesondere bei hohen Drehzahlen und vergleichsweise wenig duktilen Werkstoffen, insbesondere spröden Werkstoffen wie z.B. TiAl, weiter verbessert werden.

Das Schaufelblatt kann im Bereich des Endabschnitts wenigstens eine druckseitig ausgebildete Ausnehmung oder/und wenigstens eine saugseitig ausgebildete Ausnehmung aufweisen, wobei der Endabschnitt zwischen der druckseitigen Ausnehmung und der saugseitigen Ausnehmung angeordnet ist. Hierdurch kann in dem radial äußersten Bereich der deckbandlosen Schaufel weiteres Material und somit Masse eingespart werden, wodurch die im Betrieb wirkenden Kräfte günstig beeinflusst werden bzw. das Einlaufverhalten verbessert wird.

Die druckseitige Ausnehmung und die saugseitige Ausnehmung können entlang einer Teillänge der Druckseite bzw. der Saugseite oder entlang der gesamten Länge der Druckseite bzw. der Saugseite ausgebildet sein. Denkbar ist auch die Anordnung von jeweils mehreren Ausnehmungen auf der Druckseite bzw. der Saugseite. Hieraus resultiert, dass der Endabschnitt zumindest teilweise als radial von dem Schaufelblatt vorstehender Vorsprung ausgebildet ist, der die Schaufelspitze bildet. Der Endabschnitt der Schaufel kann in einem zusammengebauten Zustand der Turbinenstufe bzw. der Fluggasturbine einer statorseitigen Einlauffläche gegenüber angeordnet sein. Dabei kann die Einlauffläche beispielsweise eine wabenförmige Struktur aufweisen.

Die Schaufel kann aus einem spröden Werkstoff, beispielsweise einer Titanaluminid-Legierung hergestellt sein. Dabei kann die Schaufel gegossen oder geschmiedet oder/und additiv, beispielsweise durch (selektives) Elektronenstrahlschmelzen (s)EBM, gefertigt sein. Unter dem Begriff spröde Werkstoffe, wie beispielsweise TiAl, sind Werkstoffe zu verstehen, bei denen eine maximale totale Dehnung von <2% bei Raumtemperatur auftritt.

An dem Schaufelblatt können wenigstens abschnittsweise Materialverdickungen vorgesehen sein, insbesondere eine zumindest abschnittsweise verdickte Vorderkante. Hierdurch kann Schädigungen aufgrund der erhöhten Fremdpartikelenergie, insbesondere den sogenannten Impacts, entgegengewirkt werden.

An dem Schaufelblatt oder/und an dem Endabschnitt kann zumindest abschnittsweise eine Panzerung aus einem von dem Material der Schaufel unterschiedlichen Material ausgebildet sein, insbesondere aus einem keramischen Material oder aus einem Ni-basierten Material. Eine derartige teilweise oder vollständige Panzerung ermöglicht eine Verstärkung der Schaufel, um Schädigungen entgegenzuwirken. Eine Panzerung im Bereich des Endabschnitts ermöglicht zur Verbesserung des Radialspaltes ein einlauffähiges System, bei dem der gepanzerte Endabschnitt der Schaufel möglichst nahe entlang einer statorseitigen Einlauffläche bewegt wird im Betrieb.

Alternativ kann an dem Endabschnitt auch ein Aufsatz oder eine Art Krone vorgesehen sein, der aus einem vergleichsweise weichen Material hergestellt ist, wobei der Aufsatz so ausgebildet ist, dass er beim Einlaufen in die statorseitige Einlauffläche abgerieben wird. Das weichere Material eines solchen Aufsatzes ist zusätzlich so gewählt, dass es durch die Heißgasströmung nicht geschädigt wird.

Die Schaufel kann einen radialen Flächenverlauf aufweisen, welcher derart ausgebildet ist, dass sich in jedem Profilschnitt des Schaufelblattes eine statische Mittelspannung von kleiner als 150MPa einstellt.

Ferner wird eine Turbinenstufe für eine Gasturbine, insbesondere Fluggasturbine vorgeschlagen mit mehreren in Umfangsrichtung nebeneinander angeordneten, oben beschriebenen Schaufeln. Bei einer solchen Turbinenstufe können in Umfangsrichtung benachbarte Schaufeln derart ausgebildet sein, dass sie unterschiedliche Eigenfrequenzen aufweisen. Hierzu können benachbarte Schaufeln beispielsweise jeweils voneinander unterschiedliche Geometrien des Schaufelblatts aufweisen.

Schließlich wird auch ein Flugzeugtriebwerk mit einer oben erwähnten schnelllaufenden Turbinenstufe vorgeschlagen, wobei die Turbinenstufe im Betrieb des Flugzeugtriebwerks schneller dreht als ein Fan des Flugtriebwerks. Es handelt sich hierbei also um ein Flugzeugtriebwerk mit einem sogenannten Getriebefan bzw. geared Turbofan (GTF).

Nachfolgend wird die Erfindung unter Bezugnahme auf die anliegenden Figuren beispielhaft und nicht einschränkend beschrieben.
Fig. 1 zeigt in einer vereinfachten schematischen Darstellung ein Prinzipbild einer Fluggasturbine bzw. eines Flugzeugtriebwerks.
Fig. 2 zeigt in den Teilfiguren A) und B) in einer stark vereinfachten schematischen Draufsicht zwei Beispiele von deckbandlosen Schaufeln für eine Turbinenstufe.
Fig. 3 zeigt einen vereinfachten und schematischen Schnitt durch die Schaufel etwa entsprechend der Schnittlinie III-III in den Fig. 2A und 2B.
Fig. 4 zeigt in einer schematischen Darstellung eine Schaufel mit ihren Sehnenlängen.

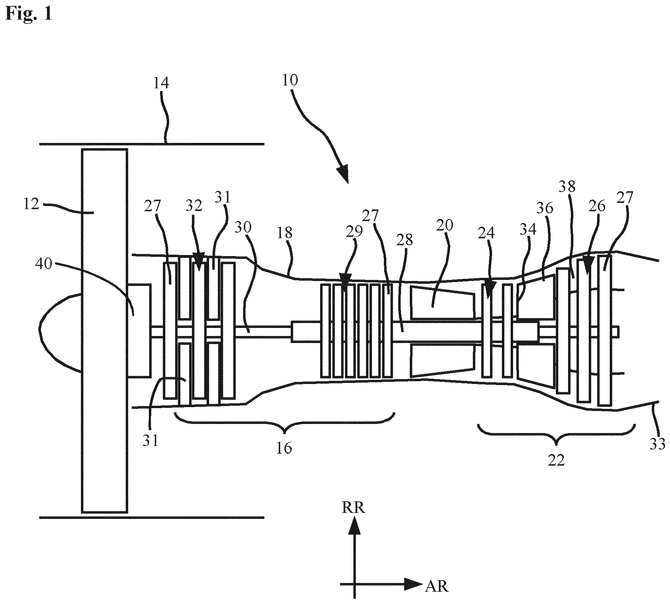

Fig. 1 zeigt schematisch und vereinfacht eine Fluggasturbine 10, die rein beispielhaft als Mantelstromtriebwerk illustriert ist. Die Gasturbine 10 umfasst einen Fan 12, der von einem angedeuteten Mantel 14 umgeben ist. In Axialrichtung AR der Gasturbine 10 schließt sich an den Fan 12 ein Verdichter 16 an, der in einem angedeuteten inneren Gehäuse 18 aufgenommen ist und einstufig oder mehrstufig ausgebildet sein kann. An den Verdichter 16 schließt sich die Brennkammer 20 an. Aus der Brennkammer ausströmendes heißes Abgas strömt dann durch die sich anschließende Turbine 22, die einstufig oder mehrstufig ausgebildet sein kann. Im vorliegenden Beispiel umfasst die Turbine 22 eine Hochdruckturbine 24 und eine Niederdruckturbine 26. Eine Hohlwelle 28 verbindet die Hochdruckturbine 24 mit dem Verdichter 16, insbesondere einem Hochdruckverdichter 29, so dass diese gemeinsam angetrieben bzw. gedreht werden. Eine in Radialrichtung RR der Turbine weitere innen liegende Welle 30 verbindet die Niederdruckturbine 26 mit dem Fan 12 und mit einem hier Niederdruckverdichter 32, so dass diese gemeinsam angetrieben bzw. gedreht werden. An die Turbine 22 schließt sich eine hier nur angedeutete Schubdüse 33 an.

Im dargestellten Beispiel einer Fluggasturbine 10 ist zwischen der Hochdruckturbine 24 und der Niederdruckturbine 26 ein Turbinenzwischengehäuse 34 angeordnet, das um die Wellen 28, 30 angeordnet ist. Zwischen der Hochdruckturbine 24 und der Niederdruckturbine 26 kann bei anderen Konstruktionen auch lediglich ein Übergangskanal vorgesehen sein statt eines Turbinenzwischengehäuses 34. In seinem radial äußeren Bereich 36 wird das Turbinenzwischengehäuse 34 von heißen Abgasen aus der Hochdruckturbine 24 durchströmt. Das heiße Abgas gelangt dann in einen Ringraum 38 der Niederdruckturbine 26. Von den Verdichtern 28, 32 und den Turbinen 24, 26 sind beispielhaft Laufschaufelkränze 27 dargestellt. Üblicherweise vorhandene Leitschaufelkränze 31 sind aus Gründen der Übersicht beispielhaft nur bei dem Verdichter 32 dargestellt.

Die Niederdruckturbine 26 und der Fan 12 sind in diesem Beispiel mittels eines hier nur schematisch angedeuteten Getriebes 40 miteinander, insbesondere eines Planetengetriebes, verbunden. Hierdurch wird die Niederdruckturbine 26 zu einer sogenannt schnelllaufenden Turbinenstufe, die eine höhere Umlaufgeschwindigkeit aufweist als der Fan 12. Dabei kann der Drehsinn der Niederdruckturbine 26 gleich oder verschieden zum Drehsinn des Fans 12 sein.

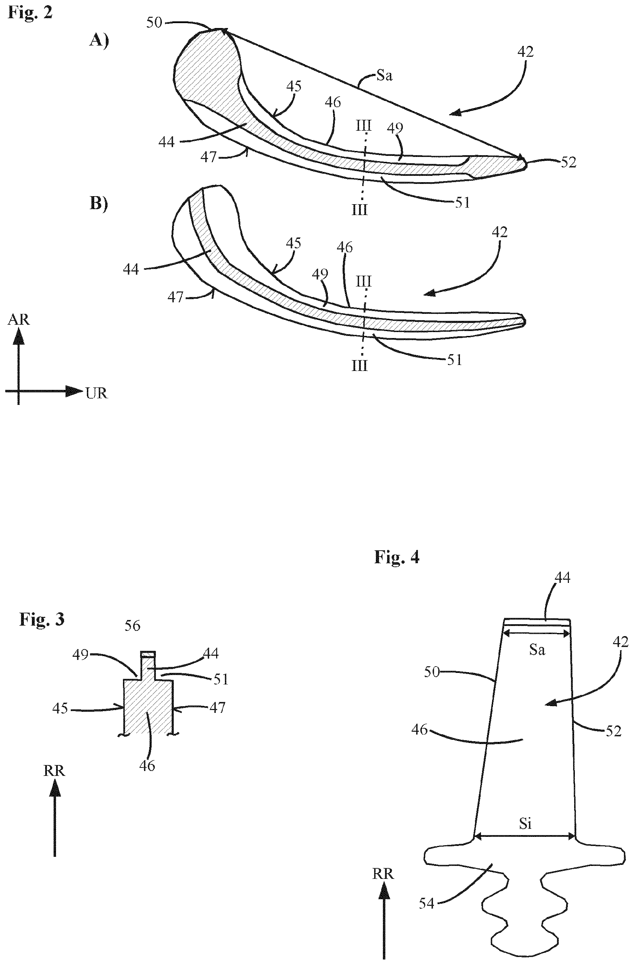

Die nachfolgende Beschreibung einer Ausführungsform der Erfindung bezieht sich insbesondere auf eine Turbinenstufe der Niederdruckturbine 26, in der mehrere Schaufeln 42 in Umfangsrichtung nebeneinander angeordnet sind. In Fig. 2 sind zwei Beispiele von Schaufeln 42 gezeigt, wobei eine vereinfachte und schematische Draufsicht auf einen radial äußeren Bereich bzw. Schaufelspitzenbereich gezeigt ist.

Die Schaufel 42 weist radial außen einen Endabschnitt 44 auf. Nach radial innen schließt sich an den Endabschnitt 44 das Schaufelblatt 46 an. Das Schaufelblatt 46 weist in üblicher Weise eine Druckseite 45 und eine Saugseite 47 auf. Im radial äußeren Bereich ist auf der Druckseite 45 wenigstens eine Ausnehmung 49 vorgesehen. Ferner ist auf der Saugseite 47 wenigstens eine Ausnehmung 51 vorgesehen. Wie aus den Beispielen der Fig. 2A und 2B ersichtlich, ist der Endabschnitt 44 zwischen den Ausnehmungen 49, 51 angeordnet. Der Endabschnitt 44 steht in Radialrichtung RR von dem Schaufelblatt 46 nach außen vor. Dies ist insbesondere aus der vereinfachten Schnittdarstellung der Fig. 3 ersichtlich.

Die druckseitige Ausnehmung 49 entlang eines Teil der Länge der Druckseite 45 ausgebildet sein. Ebenso kann die Ausnehmung 51 entlang eines Teils der Länge der Saugseite 47 ausgebildet sein. Dies ist im Beispiel der Fig. 2A gezeigt. Alternativ können die Ausnehmungen 49, 51 entlang der jeweiligen gesamten Länge der Druckseite 45 bzw. Saugseite 47 vorgesehen sein. Es wird darauf hingewiesen, dass die Fig. 2A und 2B die Anordnung des Endabschnitts 44 und der Ausnehmungen 49, 51 weder maßhaltig noch bezüglich der Form genau wiedergeben.

Durch das Vorsehen der Ausnehmungen 49, 51 im radial äußeren Bereich der Schaufel 42 kann die Masse der Schaufel 42 reduziert werden, was sich günstig auf die im Betrieb auf die Schaufel 42 wirkenden Kräfte auswirkt.

Ergänzend zum Vorsehen des Endabschnitts 44, der zwischen Ausnehmungen 49, 51 angeordnet ist bzw. verläuft, kann die Schaufel 42 bzw. deren Schaufelblatt 46 radial innen und radial außen unterschiedliche Sehnenlängen Si bzw. Sa aufweisen, was beispielhaft in der Fig. 4 dargestellt ist. Dabei wird die Sehnenlänge Si bzw. Sa zwischen einer Vorderkante 50 und einer Hinterkante 52 des Schaufelblatts 46 gemessen, wie dies auch in der Fig. 2A für die Schaufel 42 gezeigt ist.

Die radial innere Sehnenlänge Si wird dabei oberhalb eines Schaufelfußes 54 bestimmt. Die radial äußere Sehnenlänge Sa wird unterhalb des Endabschnitts 44 bestimmt. Die innere Sehnenlänge Si beträgt dabei etwa das 1,1-fache bis 1,4-fache der äußeren Sehnenlänge Sa.

An dem Endabschnitt 44 oder/und an der Vorderkante 50 des Schaufelblatts 46 kann ein Materialauftrag 56 vorgesehen sein, der zur Panzerung des übrigen Schaufelmaterials dient. Die Schaufel 42 kann insbesondere aus einem Titanaluminid (TiAl) hergestellt sein. Eine Panzerung 56 am an dem Endabschnitt 44 bzw. der Vorderkante 50 kann aus einem keramischen Material oder aus einem Ni-basierten Material, wie etwa Bornitrid, hergestellt sein. Der Materialauftrag 56 an dem Endabschnitt 44 kann auch aus einem weicheren Material hergestellt sein, so dass im Betrieb ein Einlaufen der Schaufel 42 bzw. des Endabschnitts 44 in eine statorseitige Einlauffläche möglich ist, wobei der Materialauftrag 56 dann im Betrieb der Schaufel 42 abgerieben wird. Mit anderen Worten kann auch allgemein davon gesprochen werden, dass der Endabschnitt 44 mit oder ohne Materialauftrag 56 so ausgebildet ist, dass er im Zusammenwirken mit einer statorseitigen Ringfläche bzw. ringförmigen Einlauffläche einen Ringspalt abdichten kann.

### Bezugszeichenliste

- 10: Fluggasturbine
- 12: Fan
- 14: Mantel
- 16: Verdichter
- 18: Gehäuse
- 20: Brennkammer
- 22: Turbine
- 24: Hochdruckturbine
- 26: Niederdruckturbine
- 27: Laufschaufelkranz
- 28: Hohlwelle
- 29: Hochdruckverdichter
- 30: Welle
- 31: Leitschaufelkranz
- 32: Niederdruckverdichter
- 33: Schubdüse
- 34: Turbinenzwischengehäuse
- 36: radial äußerer Bereich
- 38: Ringraum
- 40: Getriebe
- 42: Schaufel
- 44: Endabschnitt
- 45: Druckseite
- 46: Schaufelblatt
- 47: Saugseite
- 49: Ausnehmung
- 50: Vorderkante
- 51: Ausnehmung
- 52: Hinterkante
- 54: Schaufelfuß
- 56: Materialauftrag/Panzerung
- AR: Axialrichtung
- RR: Radialrichtung
- Si: radial innere Sehnenlänge
- Sa: radial äußere Sehnenlänge
- UR: Umfangsrichtung

## Patentansprüche

1. Schaufel für eine schnelllaufende Turbinenstufe (26) einer Fluggasturbine (10), insbesondere eines Flugzeugtriebwerks, mit
einem radial innen angeordneten Schaufelfuß (54), und
einem Schaufelblatt (46), das sich ausgehend von dem Schaufelfuß (54) nach radial außen erstreckt,
**dadurch gekennzeichnet, dass** die Schaufel (42) deckbandlos ausgebildet ist und das Schaufelblatt (46) einen radial außen liegenden Endabschnitt (44) aufweist, der in einem eingebauten Zustand der Schaufel (42) einer Einlauffläche gegenüber anordenbar ist, und
dass das Schaufelblatt (46) radial innen eine innere Sehnenlänge (Si) aufweist, die mindestens das 1,1-fache, vorzugsweise mindestens das 1,2-fache, insbesondere mindestens das 1,3-fache von einer radial äußeren Sehnenlänge (Sa) beträgt, wobei die innere Sehnenlänge (Si) unmittelbar oberhalb des Schaufelfußes (54) an dem Schaufelblatt (46) gemessen ist und die äußere Sehnenlänge (Sa) im Bereich oder unterhalb des Endabschnitts (44) an dem Schaufelblatt (46) gemessen ist.

2. Schaufel nach Anspruch 1, **dadurch gekennzeichnet, dass** die Schaufel für ein An² ≥ 4000 m²/s², vorzugsweise ≥ 4500 m²/s², insbesondere ≥ 5000 m²/s² im ADP-Bereich der Fluggasturbine (10) ausgelegt ist und/oder für eine dafür ausgelegte Turbinenstufe (26) oder Fluggasturbine (10) geeignet und/oder bestimmt ist.

3. Schaufel nach Anspruch 1 oder 2, **dadurch gekennzeichnet, dass** das Schaufelblatt (46) im Bereich des Endabschnitts (44) wenigstens eine druckseitig ausgebildete Ausnehmung (49) oder/und wenigstens eine saugseitig ausgebildete Ausnehmung (51) aufweist, wobei der Endabschnitt (44) zwischen der druckseitigen Ausnehmung (49) und der saugseitigen Ausnehmung (51) angeordnet ist.

4. Schaufel nach Anspruch 3, **dadurch gekennzeichnet, dass** die druckseitige Ausnehmung (49) und die saugseitige Ausnehmung (51) entlang einer Teillänge der Druckseite (45) bzw. der Saugseite (47) oder entlang der gesamten Länge der Druckseite (45) bzw. der Saugseite (47) ausgebildet sind.

5. Schaufel nach einem der vorhergehenden Ansprüche, **dadurch gekennzeichnet, dass** die Schaufel (42) aus einem spröden Werkstoff, beispielsweise einer Titanaluminid-Legierung hergestellt ist, insbesondere gegossen, geschmiedet oder/und additiv gefertigt ist.

6. Schaufel nach einem der vorhergehenden Ansprüche, **dadurch gekennzeichnet, dass** an dem Schaufelblatt (46) wenigstens abschnittsweise Materialverdickungen vorgesehen sind, insbesondere eine zumindest abschnittsweise verdickte Vorderkante (50).

7. Schaufel nach einem der vorhergehenden Ansprüche, **dadurch gekennzeichnet, dass** an dem Schaufelblatt (46) oder/und an dem Endabschnitt (44) zumindest abschnittsweise eine Panzerung (56) aus einem von dem Material der Schaufel (42) unterschiedlichen Material ausgebildet ist, insbesondere aus einem keramischen Material oder aus einem Ni-basierten Material.

8. Schaufel nach einem der vorhergehenden Ansprüche, **dadurch gekennzeichnet, dass** sie einen radialen Flächenverlauf aufweist, welcher derart ausgebildet ist, dass sich in jedem Profilschnitt des Schaufelblattes eine statische Mittelspannung von kleiner als 150MPa einstellt.

9. Turbinenstufe für eine Gasturbine, insbesondere Fluggasturbine (10) mit mehreren in Umfangsrichtung (UR) nebeneinander angeordneten Schaufeln (42) nach einem der vorhergehenden Ansprüche.

10. Turbinenstufe nach Anspruch 9, **dadurch gekennzeichnet, dass** in Umfangsrichtung (UR) benachbarte Schaufeln (42) derart ausgebildet sind, dass sie unterschiedliche Eigenfrequenzen aufweisen, insbesondere eine voneinander unterschiedliche Geometrie des Schaufelblatts (46) aufweisen.

11. Flugzeugtriebwerk mit einer schnelllaufenden Turbinenstufe nach Anspruch 9 oder 10, **dadurch gekennzeichnet, dass** die Turbinenstufe (26) im Betrieb des Flugzeugtriebwerks (10) schneller dreht als ein Fan (12) des Flugzeugtriebwerks (10).
